# FASCICULE DE BREVET EUROPEEN

(11) **EP 3 529 516 B1**
(45) Date de publication et mention de la délivrance du brevet: **30.11.2022**
(21) Numéro de dépôt: 17793877.6
(22) Date de dépôt: 19.10.2017
(51) Int. Cl.: F16H 1/06

(54) **MOTOREDUCTEUR COMPACT**
KOMPAKTGETRIEBEMOTOR
COMPACT GEAR MOTOR

(30) Priorité: 19.10.2016 FR 1660124
(43) Date de publication de la demande: 28.08.2019
(73) Titulaire: Sonceboz Automotive SA, 2605 Sonceboz-Sombeval (CH)
(72) Inventeur: WATRIN, Mathieu, 2300 La Chaux-de-Fonds (CH); ADLER, Christophe, 2735 Malleray (CH); BROSSARD, Philippe, 25140 Frambouhans (FR)
(74) Mandataire: IP Trust
(86) Numéro de dépôt international: PCT/EP2017/076733
(87) Numéro de publication internationale: WO 2018/073354

(56) Documents cités:
- WO-A1-2013/180569
- KR-A- 20140 025 097
- US-B2- 9 168 828

## Description

### Domaine de l'invention

Le domaine de l'invention est celui de la circulation de fluide à l'intérieur d'un véhicule automobile (par exemple : volets de climatisation, vanne d'eau thermostat, etc.) et concerne aussi la circulation pilotée d'air venant de l'extérieur (par exemple volet de grille d'air). Il concerne plus particulièrement un motoréducteur compact formé d'un boitier contenant un moteur électrique et un train d'engrenages réducteur.

Dans le cas des volets d'entrée d'air, beaucoup de véhicules actuels prévoient un ou plusieurs volets d'entrée d'air extérieur, disposés dans la calandre au niveau du compartiment moteur. Ces volets peuvent être déplacés entre une position fermée permettant d'isoler le compartiment moteur, par exemple pour améliorer l'aérodynamique du véhicule, ou pour optimiser la maîtrise thermique du compartiment moteur, et une position ouverte permettant le renouvellement de l'air dans le compartiment moteur par l'air venant de l'extérieur.

Ces volets sont commandés par un actionneur soit par le biais d'un système de tringlerie, soit par le biais d'une transmission par pignons, le degré d'ouverture des volets étant piloté par un calculateur.

Pour des véhicules évoluant à grande vitesse (conditions de roulage sur autoroute par exemple), la pression pouvant s'exercer sur les volets atteint des valeurs élevées nécessitant des actionneurs puissants, mais restant de faible encombrement pour permettre une intégration discrète dans la calandre du véhicule.

### Etat de la technique

On connait dans l'état de la technique la demande de brevet WO2013191330 décrivant un exemple connu de groupe moteur destiné à équiper un dispositif de commande de volet obturateur de calandre.

On connaît aussi, par le brevet américain US9168828, un autre actionneur pour une grille d'obturation d'un véhicule.

La demande de brevet européen EP2640590 décrit un autre exemple de dispositif de réglage destiné à régler une entrée d'air d'un compartiment moteur d'un véhicule automobile.

### Inconvénients des solutions de l'art antérieur

Les solutions de l'art antérieur sont mal adaptées lorsque le motoréducteur doit fournir une puissance élevée, avec un rapport de démultiplication élevé, de l'ordre de 500 à 700, dans un encombrement minimal. Il arrive que les contraintes s'exerçant sur le mécanisme réducteur provoquent une usure prématurée voire une rupture de certains composants.

Par ailleurs, les volets d'entrée d'air doivent présenter un couple de résistance au repos en l'absence d'alimentation, pour résister au déplacement forcé des volets. Certaines solutions de l'art antérieur ne répondent pas à cette contrainte, soit en raison d'une transmission réversible permettant de forcer le déplacement des volets, soit parce que les organes de sortie du motoréducteur ne résistent pas au couple exercé lors d'un déplacement forcé du volet.

Un autre inconvénient de l'art antérieur concerne les bruits mécaniques provenant des vibrations de l'axe du rotor ou de certains des composants du motoréducteur.

Enfin, les actionneurs de l'art antérieur présentent un facteur de forme mal adapté à une intégration dans la calandre en raison du positionnement de l'axe de sortie à l'extrémité de l'actionneur.

### Solution apportée par l'invention

La présente invention se propose de résoudre les problèmes cités ci-dessus. Plus particulièrement, elle concerne un motoréducteur selon la revendication 1.

Dans un mode préféré mais non limitatif ladite roue de sortie présente une cavité axiale traversante.

Pour permettre l'accouplement à un organe extérieur à piloter l'un au moins desdits moyens d'accouplements peut être formé par une empreinte creuse ou par deux empreintes creuses coaxiales.

Avantageusement, le moteur d'une part, et au moins l'un desdits engrenages intermédiaires d'autre part, sont situés de part et d'autre du plan transversal passant par l'axe de l'étage de sortie.

Préférentiellement, le boitier présente deux paliers de guidage desdits prolongements axiaux de l'étage de sortie.

Possiblement, ledit moteur peut comporter un arbre de sortie muni d'une vis sans fin. Même si non représentée, il s'agit en effet d'une alternative à l'utilisation d'un motoréducteur à engrenages droits, même si préférentiellement, l'axe du rotor dudit moteur est parallèle à l'axe de ladite de sortie et est muni d'une roue dentée entrainant le premier desdits engrenages intermédiaires.

Dans un mode de réalisation alternatif un motoréducteur selon l'invention peut aussi présenter un rotor dudit moteur muni d'un patin de frottement sec, ceci afin de permettre une minimisation des vibrations et l'irréversibilité du motoréducteur. Pour cette réalisation, le motoréducteur peut comporter un rotor comprenant une roue dentée et un flasque guidant en rotation le rotor autour de l'axe, ainsi qu'un ressort et un contre-palier de sorte que le ressort presse le contre-palier sur l'axe de rotation afin d'exercer un effort de friction.

Préférentiellement, le stator dudit moteur est constitué par un empilement de tôles présentant N dents s'étendant radialement, N étant compris entre 6 et 12, deux au moins desdites dents étant bobinées.

Préférentiellement toujours, ledit premier engrenage intermédiaire entraîne un second engrenage intermédiaire coaxial avec l'étage de sortie.

Avantageusement, l'une au moins des dents bobinées s'étend dans l'espace délimité par la couronne de sortie d'une part et la couronne de l'un desdits engrenages intermédiaires d'autre part.

Dans une réalisation alternative non représentée, on peut envisager un moteur axial, l'une au moins des dents bobinées étant logée, selon la direction parallèle à l'arbre de sortie, entre la surface de la couronne de sortie d'une part et la surface supérieure de la couronne de l'un desdits engrenages intermédiaires d'autre part.

Toujours dans une idée de compacité, avantageusement, ledit engrenage coaxial avec la roue de sortie entraîne un engrenage intermédiaire additionnel constitué par une pièce présentant deux couronnes dentées coaxiales de sections différentes.

Pour permettre le chassage du circuit imprimé sans déformer le stator, il est aussi dans l'objet de l'invention que de permettre une insensibilité par l'action un corps de bobine présentant des épaulements venant en appui sur le bord des dents adjacentes au pôle portant ladite bobine, ledit corps de bobine présentant des connecteurs aptes à interconnecter un circuit imprimé par un ajustement en force, selon une direction perpendiculaire au plan d'appui desdits épaulements.

Il est aussi dans l'objet de l'invention que de permettre la mise à la masse électrique du stator par l'aide d'un ressort de compression guidé par un pion s'étendant parallèlement à l'axe de rotation du moteur, sur le fond du boîtier, la longueur dudit ressort étant supérieure à l'épaisseur du stator, ledit ressort de compression venant en contact mécanique et électrique avec la surface non isolée du bord du paquet de tôles statorique et une surface non isolée du circuit imprimé lorsqu'il est mis en compression par ledit circuit imprimé superposé au stator.

A titre d'exemple particulier pouvant être adressé avec l'invention, citons le réglage des grilles d'entrée d'air d'un compartiment moteur d'un véhicule automobile, ou bien encore des vannes de régulation thermique, ces applications n'étant pas limitatives.

### Description détaillée d'un exemple non limitatif de réalisation d'un actionneur selon l'invention

La présente invention sera mieux comprise à la lecture de la description d'un exemple non limitatif de réalisation qui suit, se référant aux dessins annexés où :

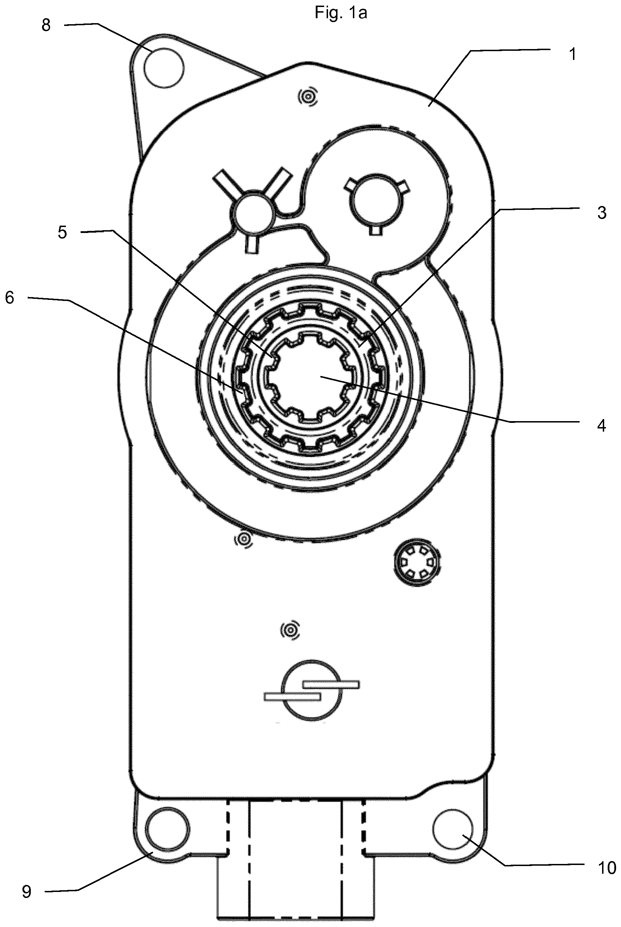

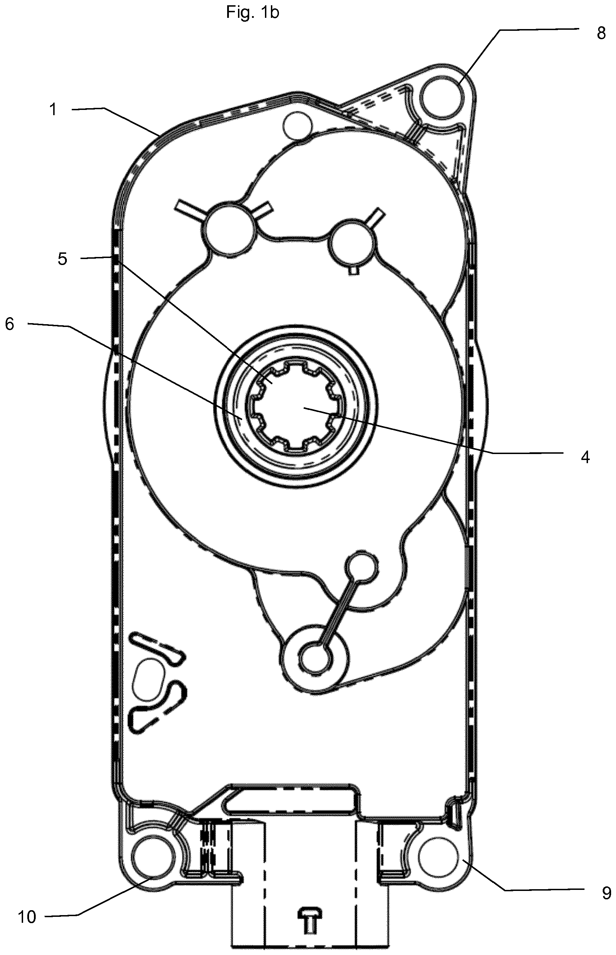

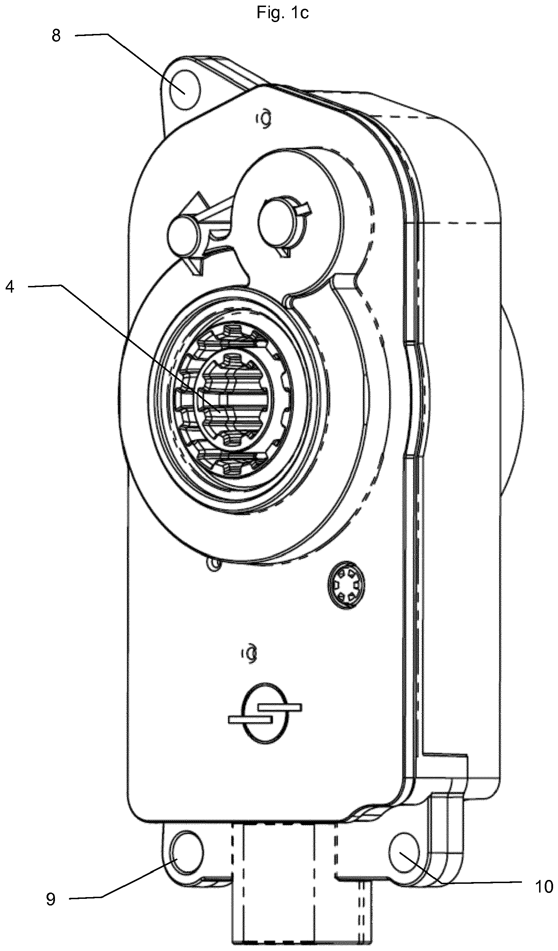

- les figures 1a, 1b et 1c représentent des vues, respectivement, du dessus, du dessous et en perspective avant de l'actionneur dans un mode de réalisation préféré,
- la figure 2 représente une vue du dessus ouvert (sans couvercle, ni joint couvercle) du moteur des figures la à 1c,
- la figure 3 représente une vue de coupe du moteur des figures la à 1c qui passe par l'axe de la roue de sortie et l'axe du rotor permettant d'illustrer la sortie débouchant aux deux extrémités, les engrenages coaxiaux et le concept de patin du rotor,
- la figure 4 représente une vue du train d'engrenages à axes parallèles permettant d'illustrer l'enchainement des roues,
- la figure 5 représente une vue du stator et du train d'engrenages à axes parallèles permettant d'illustrer la bobine du stator qui se trouve entre deux engrenages dans l'axe vertical,
- la figure 6 représente une vue du stator permettant d'illustrer les appuis des corps de bobines sur le paquet de tôles pour éviter la flexion lors du chassage du circuit imprimé,
- la figure 7 représente une vue de coupe du moteur permettant d'illustrer le concept de mise à la masse du stator et de patin sur le rotor.

### Description générale de l'actionneur

L'actionneur selon l'invention est constitué par un boîtier (1) présentant sur ses deux faces principales des ouvertures pour le passage des moyens d'accouplement.

La figure la représente la vue de la face principale supérieure du boîtier (1). Dans l'exemple décrit, le moyen d'accouplement est une pièce unique de sortie, cylindrique (3), présentant une cavité axiale traversante (4) débouchant aux deux extrémités.

L'interface mécanique entre l'organe à commander (par exemple : un volet) et l'actionneur électrique est généralement réalisée par un axe mâle, côté volet, qui s'insère dans une roue de sortie femelle, côté actionneur. L'interface mécanique doit être capable de transmettre le couple généré par l'actionneur.

Pour certaines applications où les volets sont apparents sur la calandre, l'actionneur doit avoir une interface de sortie de chaque côté de l'actionneur afin d'être compatible avec différents systèmes de volet :
o un premier système de volet a besoin d'un couple de l'ordre de 6 Nm et n'utilise qu'une seule interface de sortie,
o un second système de volet a besoin d'un couple de l'ordre de 4 Nm et utilise les deux interfaces de sortie de part et d'autre de l'actionneur.

Le dimensionnement du moteur électrique et du train d'engrenages de l'actionneur selon l'invention permet de gérer des couples de l'ordre de 6 Nm. L'interface de sortie est un organe de sortie débouchant de chaque côté de l'actionneur à axe creux, car l'empreinte femelle traverse tout l'actionneur.

Dans cet exemple non limitatif, la partie terminale au moins de la cavité (4) présente une zone crénelée (5). Cette zone (5), correspondant à une première empreinte, pourrait présenter d'autres configurations connues pour permettre la transmission d'un couple de rotation, par exemple une section intérieure polygonale ou ovale. En particulier, la section peut présenter la forme d'une étoile à 8 branches formées par 2 carrés.

Dans cet exemple, cette zone (5) est entourée par une deuxième zone crénelée (6) coaxiale correspondant à une deuxième empreinte.

L'empreinte (5) intègre des cannelures permettant de transmettre au mieux les efforts de l'ordre de 4 Nm. Une seconde empreinte (6) est disposée autour de la première. Grâce à son diamètre et à son nombre de dents plus élevés, elle permet de transmettre des couples typiques de 6 Nm. Afin d'assurer l'étanchéité des actionneurs, des épaulements sont intégrés de part et d'autre de la roue de sortie. Ils permettent l'insertion de deux joints (11, 12) de diamètres différents. Enfin, deux paliers (23, 24) sont présents afin d'assurer respectivement le guidage dans le boîtier et le couvercle.

La face opposée au couvercle présente également une empreinte permettant d'accoupler un autre organe d'entrainement.

Il est ainsi possible d'accoupler différents arbres sans nécessiter de changer d'actionneur, ou d'entraîner deux arbres de sortie, par exemple pour des volets de chaque côté du boitier (1).

Le boîtier présente un connecteur (7) entourant la connectique électrique, ainsi que des oreilles de fixation (8 à 10).

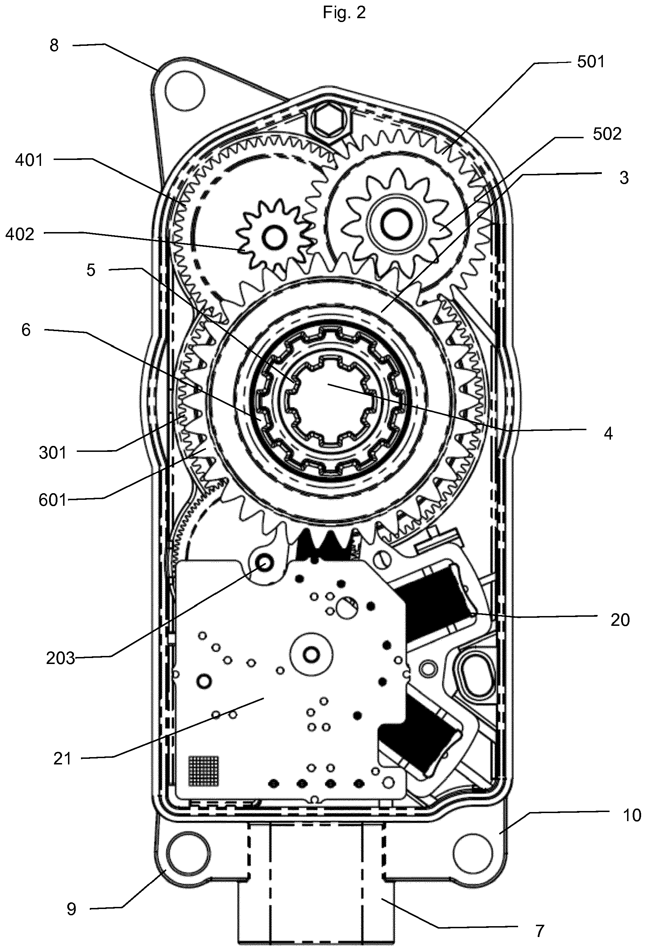

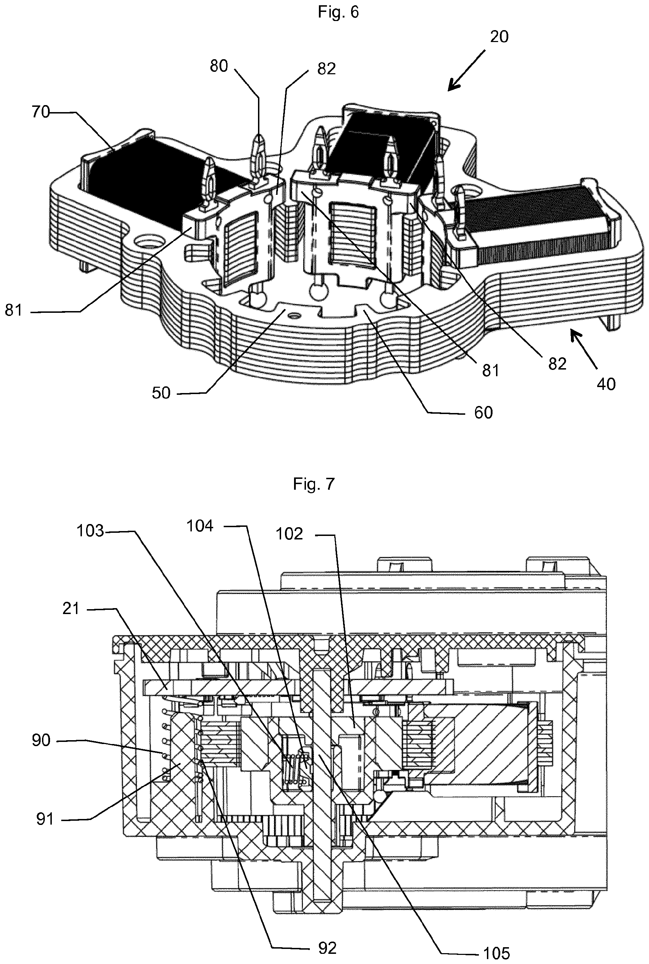

Comme visible en figures 2 et 6, le boitier (1) comporte un moteur électrique (20) relié électriquement et mécaniquement à un circuit imprimé (21).

Le moteur électrique (20) présente une structure décrite dans le brevet EP2171831. En effet, le facteur de forme particulier de ce moteur permet de mieux intégrer les éléments de la présente invention.

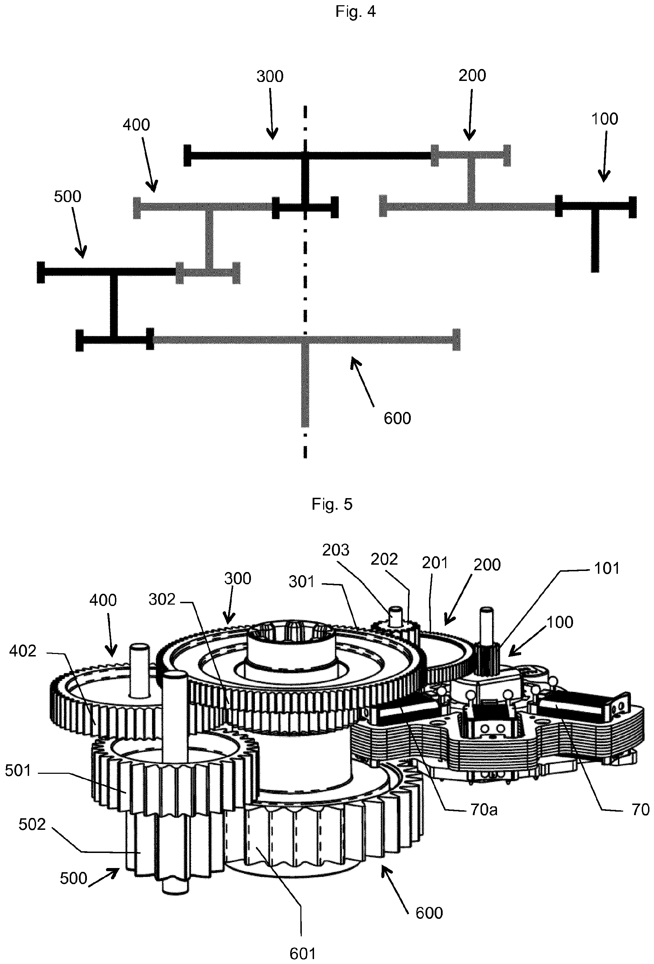

Le moteur électrique (20) comporte un stator (40) formé par un assemblage de tôles découpées, présentant 6 dents larges (50) et 6 dents étroites (60), et un rotor (100), visible en figure 5, présentant N paires de pôles aimantés (préférentiellement radialement ou en feston) en sens alternés.

Les bobinages (70) sont placés autour de trois des dents larges (50) ce qui permet d'obtenir le maximum de couple par ampère-tour du moteur.

Le rotor (100) présente typiquement un diamètre de 18 mm et comporte des aimants permanents de type NdFeB (rémanence typique de 0,75T).

Comme visible en figures 4 et 5, une série d'engrenages à axes parallèles transmet le mouvement du rotor (100) du moteur (20) à la roue de sortie (600).

Ce train d'engrenages à axes parallèles est constitué de 5 étages répartis de part et d'autre de la roue de sortie (600) qui est constituée par une pièce unique, en matière plastique moulée dans l'exemple décrit. La roue de sortie (600) est formée par un organe cylindrique traversant creux, présentant une couronne dentée de transmission (601). Une des roues intermédiaires (300) de l'engrenage est concentrique avec la roue de sortie (600). Le réducteur comprend une succession de roues (100, 200, 300, 400, 500, 600). Le rapport de transmission est typiquement de 550:1.

La roue de sortie (600) est disposée, longitudinalement, entre le moteur (20) et les roues intermédiaires (400) et (500). Avantageusement, une bobine (70a) du stator se trouve entre deux engrenages (200, 600) dans l'axe vertical. Sur la figure 4, on remarque schématiquement la place disponible entre ces deux engrenages (600) et (200), le moteur n'étant ici pas représenté.

Le boitier (1) comprend un palier (23) dont le diamètre intérieur sert de guidage pour la roue de sortie (600) et dont le diamètre extérieur sert de guidage à la roue mobile concentrique (300). Cela permet de gérer plus précisément les jeux et maitriser l'usure des paliers.

Le premier étage de réduction est constitué par un pignon denté (101) monté sur l'axe du rotor (100) qui entraine une roue dentée (201) montée sur un axe (203) traversant le stator. La roue dentée (201) est accouplée à un pignon (202), l'accouplement peut être réalisé par moulage pour former une seule pièce en matière plastique.

Le deuxième étage de réduction est constitué par le pignon (202) qui entraîne la roue dentée (301), coaxiale avec l'organe de sortie à axe creux (600). Cette roue dentée (301) est accouplée à un pignon (302) pour former une seule pièce (300).

Le troisième étage de réduction est constitué par le pignon (302) qui entraîne la roue dentée (401) accouplée à un pignon (402) pour former ensemble la pièce (400).

Le quatrième étage de réduction est constitué par le pignon (402) qui entraîne la grande roue (501) accouplée à une petite roue (502) pour former ensemble la pièce (500).

Le cinquième étage de réduction est constitué par le pignon (502) qui entraîne enfin la couronne dentée (601) solidaire de l'organe de sortie à axe creux (600) et concentrique avec la pièce (300).

### Montage du moteur

Les bobinages (70) présente des broches de connexion (80) à emmanchement (connecteurs de type « press-fit ») s'étendant parallèlement à l'axe du rotor (100).

Lors de l'assemblage, le circuit imprimé (21) est pressé contre les broches s'étendant perpendiculairement à la surface transversale du moteur, les broches étant emmanchées dans des trous transversaux métallisés du circuit imprimé (21).

Ces broches (80) peuvent être des broches massives (qui ne se tordent pas au cours de l'insertion) ou des broches adaptables (qui se compressent ou « s'adaptent » mécaniquement au cours de l'insertion).

Pour diminuer la déformation du stator lors de l'insertion en force du circuit imprimé (21), le corps de bobine (71) présente deux épaulements (81, 82) de chaque côté, transversalement, de la bobine (70). Ces épaulements (81, 82) permettent une répartition de l'effort d'insertion (typiquement de 200N) en trois points, effort repris par le stator (40) au niveau du pôle central et de deux appuis sur les pôles latéraux entourant le pôle central. Cet effort, réparti sur le stator (40), est transmis lors de l'insertion du circuit imprimé (21) sur les bobines (70).

Le rotor (100) présente une fonctionnalité permettant de limiter les vibrations lors du fonctionnement par introduction d'un léger frottement.

Cette fonctionnalité est permise par l'utilisation d'un flasque (102) supplémentaire monté après l'insertion d'un contre palier (ou patin) (104) et d'un ressort (103) qui applique son effort sur l'axe (105) de rotation du rotor (100) par le biais dudit patin (104).

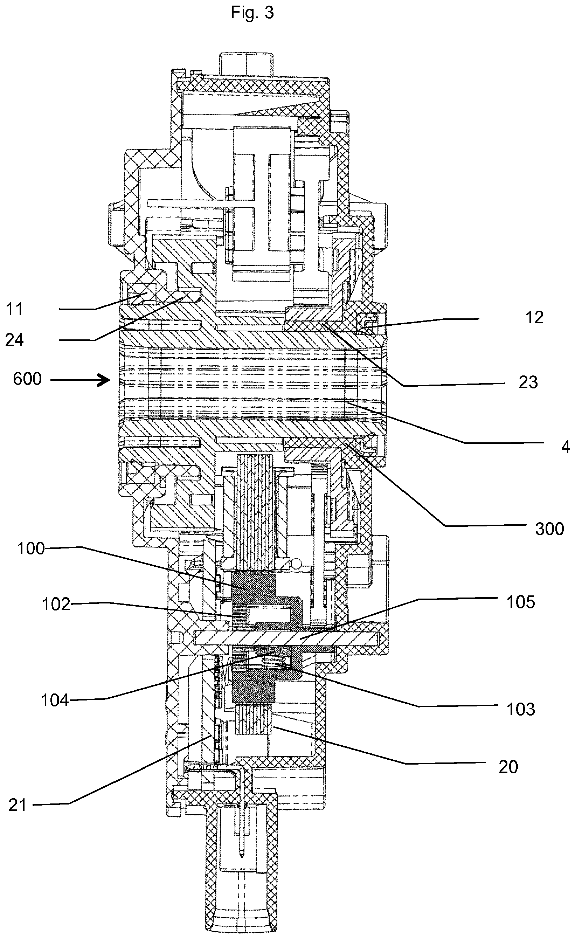

Ce flasque (102) au rotor (100), illustré aux figures 3 et 7 présente les avantages suivants :
- Réalisation d'un guidage par deux fonctions de paliers cylindres concentriques.
- Si l'effort radial magnétique (par attraction du rotor vers le stator), lors de l'utilisation du moteur, est supérieur à l'effort crée par le patin (104), le flasque (102) limitera le basculement du rotor (100) et ainsi le bruit.
- Constitution d'un réservoir de graisse.
- Suppression du risque de perte du contre palier (104) et du ressort (103) en particulier en cas de vibrations élevées dues au mouvement du moteur thermique, le flasque permettant de garantir que le contre palier (104) ne sort pas de son logement.

Dans le cas d'utilisation du motoréducteur pour activer des grilles d'entrée d'air d'un compartiment moteur d'un véhicule automobile, et afin de garantir que le volet d'entrée d'air ne peut pas être ouvert par une pression exercée sur les lames du volet lorsque le véhicule est à l'arrêt (alimentation électrique absente), l'introduction du frottement par le patin (104) permettra d'augmenter le couple résiduel du moteur et assurer l'irréversibilité mécanique.

Le motoréducteur comprend aussi une fonctionnalité de mise à la masse (électrique) du stator. Pour cela, il comporte un ressort de compression (90) guidé par un pion (91) s'étendant parallèlement à l'axe de rotation du moteur (20), sur le fond du boîtier et formé intégralement avec le boitier (1). La longueur à vide dudit ressort (90) étant supérieure à l'épaisseur du stator (40), ledit ressort de compression (90) venant en contact mécanique et électrique avec la surface non isolée du bord (92) du paquet de tôles statorique et une surface non isolée du circuit imprimé (21) lorsqu'il est mis en compression par ledit circuit imprimé (21) inséré sur le stator (40).

## Revendications

1. - Motoréducteur formé d'un boîtier (1) comprenant un moteur électrique (20) entrainant un train d'engrenages à axes parallèles réducteur présentant au moins un engrenage intermédiaire (200, 300, 400, 500) et une roue de sortie (600),
- ladite roue de sortie (600) pétant constituée par une pièce unique présentant une couronne dentée (601) prolongée de part et d'autre par des prolongements axiaux cylindriques guidés chacun par le boîtier (1), chacun desdits prolongements présentant à leur extrémité un moyen d'accouplement avec un organe extérieur à entraîner,
- ladite roue de sortie (600) étant coaxiale avec une roue dentée (300) constituant l'un desdits engrenages intermédiaires,
**caractérisé en ce que** ladite roue dentée (300) est libre en rotation par rapport à l'un desdits prolongements axiaux.

2. - Motoréducteur selon la revendication 1 **caractérisé en ce que** ladite roue de sortie (600) présente une cavité axiale traversante (4).

3. - Motoréducteur selon la revendication 1 **caractérisé en ce que** l'un au moins desdits moyens d'accouplements est formé par une empreinte creuse.

4. - Motoréducteur selon la revendication 1 **caractérisé en ce que** l'un au moins desdits moyens d'accouplements est formé de deux empreintes creuses coaxiales.

5. - Motoréducteur selon la revendication 1 **caractérisé en ce que** le moteur d'une part, et au moins l'un desdits engrenages intermédiaires (200, 300, 400, 500) d'autre part, sont situés de part et d'autre d'un plan transversal passant par l'axe de la roue de sortie (600).

6. - Motoréducteur selon la revendication 1 **caractérisé en ce que** le boîtier présente deux paliers (23, 24) de guidage desdits prolongements axiaux de l'étage de sortie.

7. - Motoréducteur selon la revendication 1 **caractérisé en ce que** ledit moteur comporte un arbre de sortie muni d'une vis sans fin.

8. - Motoréducteur selon la revendication 1 **caractérisé en ce que** l'axe du rotor (100) dudit moteur (20) est parallèle à l'axe de ladite roue de sortie (600) et est muni d'une roue dentée (101) entrainant le premier (200) desdits engrenages intermédiaires (200, 300, 400, 500).

9. - Motoréducteur selon la revendication 8 **caractérisé en ce que** le rotor dudit moteur est muni d'un patin (104) de frottement sec.

10. - Motoréducteur selon la revendication 1 **caractérisé en ce qu'**il comporte un rotor (100) comprenant une roue dentée (101) et un flasque (102) guidant en rotation le rotor autour de l'axe (105), ainsi qu'un ressort (103) et un contre-palier (104) de sorte que le ressort (103) presse le contre-palier (104) sur l'axe de rotation (105) afin d'exercer un effort de friction.

11. - Motoréducteur selon la revendication 8 **caractérisé en ce que** le stator (40) dudit moteur est constitué par un empilement de tôles présentant N dents s'étendant radialement, N étant compris entre 6 et 12, deux au moins desdites dents étant bobinées.

12. - Motoréducteur selon la revendication 8 **caractérisé en ce que** ledit premier engrenage intermédiaire (200) entraîne un second engrenage intermédiaire (300) coaxial avec la roue de sortie (600).

13. - Motoréducteur selon la revendication 11 **caractérisé en ce que** l'une au moins des dents bobinées (50) s'étend dans l'espace délimité par la roue de sortie (600) d'une part et la roue de l'un desdits engrenages intermédiaires (200, 300, 400, 500) d'autre part.

14. - Motoréducteur selon la revendication 13 **caractérisé en ce que** l'une au moins des dents bobinée (50) est logée, selon la direction parallèle à l'arbre de sortie, entre la surface de la roue de sortie (600) d'une part et la surface supérieure de la roue de l'un desdits engrenages intermédiaires (200, 300, 400, 500) d'autre part.

15. - Motoréducteur selon la revendication 1 **caractérisé en ce que** ladite roue dentée (300) avec la roue de sortie (600) entraîne un engrenage intermédiaire additionnel (400) constitué par une pièce présentant deux roues/pignons dentées coaxiales de sections différentes.

16. - Motoréducteur selon la revendication 11 **caractérisé en ce que** les bobines (70) sont supportées par un corps de bobine (71) présentant des épaulements (81, 82) venant en appui sur le bord des dents adjacentes au pôle portant ladite bobine (70), ledit corps (71) de bobine présentant des broches de connexion (80) aptes à interconnecter un circuit imprimé (21) par un ajustement en force, selon une direction perpendiculaire au plan d'appui desdits épaulements (81, 82).

17. - Motoréducteur selon la revendication 11 **caractérisé en ce qu'**il comporte un ressort de compression (90) guidé par un pion (91) s'étendant parallèlement à l'axe de rotation du moteur (20), sur le fond du boîtier (1), la longueur dudit ressort (90) étant supérieure à l'épaisseur du stator (40), ledit ressort de compression venant en contact mécanique et électrique avec la surface non isolée du bord (92) du paquet de tôles statorique et une surface non isolée du circuit imprimé (21) lorsqu'il est mis en compression par ledit circuit imprimé (21) superposé au stator (40).

18. - Motoréducteur selon l'une des revendications précédentes **caractérisée en ce qu'**il est utilisé pour le réglage des grilles d'entrée d'air d'un compartiment moteur d'un véhicule automobile.

19. . Motoréducteur selon la revendication 1 **caractérisé en ce que** le boitier (1) présente un palier (23) dont le diamètre intérieure sert de guidage pour la roue de sortie (600) et dont le diamètre extérieur sert de guidage à la roue dentée (300).

## Patentansprüche

1. Getriebemotor, der aus einem Gehäuse (1) ausgebildet ist, das einen Elektromotor (20) umfasst, der einen Untersetzungsgetriebezug mit parallelen Achsen antreibt, der wenigstens ein Zwischengetriebe (200, 300, 400, 500) und ein Abtriebsrad (600) vorweist,
- wobei das Abtriebsrad (600) aus einem einzigen Teil besteht, das einen Zahnkranz (601) vorweist, der auf beiden Seiten durch zylindrische axiale Verlängerungen verlängert ist, die jeweils durch das Gehäuse (1) geführt werden, wobei jede der Verlängerungen an ihrem Ende ein Mittel zum Koppeln mit einem äußeren, anzutreibenden Element vorweist,
- wobei das Abtriebsrad (600) koaxial zu einem Zahnrad (300) ist, das eines der Zwischengetriebe bildet, **dadurch gekennzeichnet, dass** das Zahnrad (300) in Bezug auf eine der axialen Verlängerungen frei drehbar ist.

2. Getriebemotor nach Anspruch 1, **dadurch gekennzeichnet, dass** das Abtriebsrad (600) einen durchgehenden axialen Hohlraum (4) vorweist.

3. Getriebemotor nach Anspruch 1, **dadurch gekennzeichnet, dass** wenigstens eines der Kopplungsmittel durch eine hohle Vertiefung ausgebildet ist.

4. Getriebemotor nach Anspruch 1, **dadurch gekennzeichnet, dass** wenigstens eines der Kopplungsmittel aus zwei koaxialen hohlen Vertiefungen ausgebildet ist.

5. Getriebemotor nach Anspruch 1, **dadurch gekennzeichnet, dass** der Motor einerseits und wenigstens eines der Zwischengetriebe (200, 300, 400, 500) andererseits auf beiden Seiten einer Querebene liegen, die durch die Achse des Abtriebsrads (600) verläuft.

6. Getriebemotor nach Anspruch 1, **dadurch gekennzeichnet, dass** das Gehäuse zwei Lager (23, 24) zum Führen der axialen Verlängerungen der Abtriebsstufe vorweist.

7. Getriebemotor nach Anspruch 1, **dadurch gekennzeichnet, dass** der Motor eine mit einer Schnecke versehene Abtriebswelle aufweist.

8. Getriebemotor nach Anspruch 1, **dadurch gekennzeichnet, dass** die Achse des Rotors (100) des Motors (20) parallel zu der Achse des Abtriebsrads (600) ist und mit einem Zahnrad (101) versehen ist, das das erste (200) der Zwischengetriebe (200, 300, 400, 500) antreibt.

9. Getriebemotor nach Anspruch 8, **dadurch gekennzeichnet, dass** der Rotor des Motors mit einer trockenen Reibungsplatte (104) versehen ist.

10. Getriebemotor nach Anspruch 1, **dadurch gekennzeichnet, dass** er einen Rotor (100), der ein Zahnrad (101) und einen Flansch (102) umfasst, der den Rotor in Drehung um die Achse (105) herum führt, sowie eine Feder (103) und ein Gegenlager (104) aufweist, so dass die Feder (103) das Gegenlager (104) auf die Drehachse (105) drückt, um eine Reibungskraft auszuüben.

11. Getriebemotor nach Anspruch 8, **dadurch gekennzeichnet, dass** der Stator (40) des Motors aus einem Stapel von Blechen besteht, die N sich radial erstreckende Zähne vorweisen, wobei N von 6 bis 12 ist, wobei wenigstens zwei der Zähne gewickelt sind.

12. Getriebemotor nach Anspruch 8, **dadurch gekennzeichnet, dass** das erste Zwischengetriebe (200) ein zweites Zwischengetriebe (300) antreibt, das koaxial zu dem Abtriebsrad (600) ist.

13. Getriebemotor nach Anspruch 11, **dadurch gekennzeichnet, dass** sich wenigstens einer der gewickelten Zähne (50) in den Raum erstreckt, der durch das Abtriebsrad (600) einerseits und das Rad eines der Zwischengetriebe (200, 300, 400, 500) andererseits begrenzt ist.

14. Getriebemotor nach Anspruch 13, **dadurch gekennzeichnet, dass** wenigstens einer der gewickelten Zähne (50) in der Richtung parallel zu der Abtriebswelle zwischen der Oberfläche des Abtriebsrads (600) einerseits und der oberen Oberfläche des Rads eines der Zwischengetriebe (200, 300, 400, 500) andererseits untergebracht ist.

15. Getriebemotor nach Anspruch 1, **dadurch gekennzeichnet, dass** das Zahnrad (300) mit dem Abtriebsrad (600) ein zusätzliches Zwischengetriebe (400) antreibt, das aus einem Teil besteht, das zwei koaxiale Zahnräder/Ritzel unterschiedlichen Querschnitts vorweist.

16. Getriebemotor nach Anspruch 11, **dadurch gekennzeichnet, dass** die Wicklungen (70) durch einen Wickelkörper (71) getragen sind, der Schultern (81, 82) vorweist, die auf der Kante der Zähne neben dem die Wicklung (70) tragenden Pol aufliegen, wobei der Wickelkörper (71) Verbindungsstifte (80) vorweist, die geeignet sind, eine gedruckte Schaltung (21) durch eine Presspassung in einer Richtung senkrecht zu der Auflageebene der Schultern (81, 82) miteinander zu verbinden.

17. Getriebemotor nach Anspruch 11, **dadurch gekennzeichnet, dass** er eine Druckfeder (90) aufweist, die durch einen Zapfen (91) geführt ist, der sich parallel zu der Drehachse des Motors (20) auf dem Boden des Gehäuses (1) erstreckt, wobei die Länge der Feder (90) größer als die Dicke des Stators (40) ist, wobei die Druckfeder in mechanischen und elektrischen Kontakt mit der nicht isolierten Oberfläche der Kante (92) des Statorblechpakets und einer nicht isolierten Oberfläche der gedruckten Schaltung (21) kommt, wenn sie durch die gedruckte Schaltung (21), die dem Stator (40) überlagert ist, unter Druck gesetzt wird.

18. Getriebemotor nach einem der vorhergehenden Ansprüche, **dadurch gekennzeichnet, dass** er zum Einstellen der Lufteinlassgitter eines Motorraums eines Kraftfahrzeugs verwendet wird.

19. Getriebemotor nach Anspruch 1, **dadurch gekennzeichnet, dass** das Gehäuse (1) ein Lager (23) vorweist, dessen Innendurchmesser als Führung für das Abtriebsrad (600) dient und dessen Außendurchmesser als Führung für das Zahnrad (300) dient.

## Claims

1. Gear motor formed of a housing (1) comprising an electric motor (20) which drives a parallel-shaft reduction gear train that comprises at least one intermediate gear (200, 300, 400, 500) and an output wheel (600),
- said output wheel (600) consisting of a single component having a toothed ring (601) which is extended on either side by cylindrical axial extensions each guided by the housing (1), each of said extensions having at their end a means for coupling with an external drive member,
- said output wheel (600) being coaxial with a toothed wheel (300) that forms one of said intermediate gears,
**characterized in that** said toothed wheel (300) is freely rotatable relative to one of said axial extensions.

2. Gear motor according to claim 1, **characterized in that** said output wheel (600) has an axial through cavity (4).

3. Gear motor according to claim 1, **characterized in that** at least one of said coupling means is formed by a hollow recess.

4. Gear motor according to claim 1, **characterized in that** at least one of said coupling means is formed of two coaxial hollow recesses.

5. Gear motor according to claim 1, **characterized in that** the motor and at least one of said intermediate gears (200, 300, 400, 500) are located on either side of a transverse plane passing through the axis of the output wheel (600).

6. Gear motor according to claim 1, **characterized in that** the housing has two bearings (23, 24) for guiding said axial extensions of the output stage.

7. Gear motor according to claim 1, **characterized in that** said motor comprises an output shaft provided with a worm.

8. Gear motor according to claim 1, **characterized in that** the shaft of the rotor (100) of said motor (20) is parallel to the axis of said output wheel (600) and is provided with a toothed wheel (101) which drives the first (200) of said intermediate gears (200, 300, 400, 500).

9. Gear motor according to claim 8, **characterized in that** the rotor of said motor is provided with a dry friction pad (104).

10. Gear motor according to claim 1, **characterized in that** it comprises a rotor (100) having a toothed wheel (101) and a flange (102) which guides the rotor in rotation about the shaft (105), as well as a spring (103) and a counter-bearing (104) so that the spring (103) presses the counter-bearing (104) on the rotating shaft (105) in order to exert a friction force.

11. Gear motor according to claim 8, **characterized in that** the stator (40) of said motor consists of a stack of laminations having N teeth which extend radially, N being between 6 and 12, at least two of said teeth being coiled.

12. Gear motor according to claim 8, **characterized in that** said first intermediate gear (200) drives a second intermediate gear (300) which is coaxial with the output wheel (600).

13. Gear motor according to claim 11, **characterized in that** at least one of the coiled teeth (50) extends in the space delimited by the output wheel (600) and the wheel of one of said intermediate gears (200, 300, 400, 500).

14. Gear motor according to claim 13, **characterized in that** at least one of the coiled teeth (50) is housed, in the direction parallel to the output shaft, between the surface of the output wheel (600) and the upper surface of the wheel of one of said intermediate gears (200, 300, 400, 500).

15. Gear motor according to claim 1, **characterized in that** said toothed wheel (300), together with the output wheel (600), drives an additional intermediate gear (400) which consists of a portion having two coaxial toothed wheels/pinions of different cross sections.

16. Gear motor according to claim 11, **characterized in that** the coils (70) are supported by a coil body (71) having shoulders (81, 82) which abut the edge of the teeth adjacent to the pole which carries said coil (70), said coil body (71) having connection pins (80) which are capable of interconnecting a printed circuit (21) by force fitting, in a direction which is perpendicular to the bearing plane of said shoulders (81, 82).

17. Gear motor according to claim 11, **characterized in that** it comprises a compression spring (90) which is guided by a peg (91) that extends in parallel with the rotating shaft of the motor (20), on the bottom of the housing (1), the length of said spring (90) being greater than the thickness of the stator (40), said compression spring coming into mechanical and electrical contact with the uninsulated surface of the edge (92) of the laminated stator core and an uninsulated surface of the printed circuit (21) when said spring is compressed by said printed circuit (21) which is placed on top of the stator (40).

18. Gear motor according to any of the preceding claims, **characterized in that** it is used for adjusting the air inlet grilles of an engine compartment of a motor vehicle.

19. Gear motor according to claim 1, **characterized in that** the housing (1) has a bearing (23) of which the inner diameter is used to guide the output wheel (600) and of which the outer diameter is used to guide the toothed wheel (300).
